# EUROPEAN PATENT SPECIFICATION

(11) **EP 3 117 978 B1**
(45) Date of publication and mention of the grant of the patent: **14.11.2018**
(21) Application number: 15380029.7
(22) Date of filing: 15.07.2015
(51) Int. Cl.: B29C 65/08, B65B 61/18, B29C 65/78

(54) **HORIZONTAL AUTOMATIC PACKAGING MACHINE**
HORIZONTALE AUTOMATISCHE VERPACKUNGSMASCHINE
MACHINE D'EMBALLAGE AUTOMATIQUE HORIZONTALE

(43) Date of publication of application: 18.01.2017
(73) Proprietor: Mespack, S.L., 08130 Santa Perpètua de Mogoda (Barcelona) (ES)
(72) Inventor: Mora Flores, Francisco, 08100 Mollet del Vallès (Barcelona) (ES)
(74) Representative: Juncosa Miró, Jaime

(56) References cited:
- EP-A1- 2 263 860
- WO-A1-2014/173735
- DE-A1-102009 043 143
- DE-A1-102010 028 932
- JP-A- S59 178 215

## Description

### Field of the Art

The present invention relates to an automatic horizontal packaging machine for filling and sealing flexible containers made of a heat-sealable film, provided with a closure assembly with a base provided with convex attachment surfaces for attachment with upper edges of the flexible container, the sealing being obtained by means of welding using a sonotrode.

### State of the Art

Use of sonotrodes for welding flexible heat-sealable films also in the field of sealed flexible container manufacture is known in the state of the art. However, said known technique is limited to making flat welds, since sonotrodes expand and shrink during vibration defining a direction of vibration applied perpendicular to the weld to be made. If the area to be welded is not flat, said direction of vibration cannot be applied perpendicular to the entire surface to be welded, so its application is irregular and non-homogeneous, and therefore the weld is also irregular and non-homogeneous.

On the other hand, application of a heat-weld with a specific geometry by means of pressing an element provided with a geometry complementary to said geometry of the weld against the element to be welded, even by applying pressure from two opposite sides with two welders provided with said geometry, is also known through patent document EP2565017, for example. However, the inclusion of sonotrodes in said solution would apply vibration in a direction parallel to the direction in which pressure is applied, giving rise to the problem described above.

Finally, flexible containers provided with a closure assembly are also known, particularly in the field of food in single portion containers, but such containers require the inclusion of a closure assembly in the form of a rigid element intercalated between the edges of the two flexible films defining the flexible container. Said closure assembly allows including an easy-open closure or a thread to allow opening and closing same, however, since it is intercalated between the two films, they represent a bulge thereof, and therefore the weld of said films on said closure assembly cannot be a flat weld. For this reason, the known state of the art for such containers makes said weld by means of heat welding, even in the cases in which the rest of the welds defining the flexible container have been produced by means of ultrasonic welding. However, said heat welding can have different problems and can even change the content of the container, for this reason the ability of welding the closure assembly to the rest of the container by means of ultrasonic welding is advantageous.

Document DE102010028932A1 discloses a welding unit for sealing flexible containers made of a heat-sealable film including a closure assembly. The welding unit comprises a first welding station including a first sonotrode in cooperation with a first plate and a second welding station including a second sonotrode in cooperation with a second plate. In the first welding station the first sonotrode is arranged on a first side of an horizontal path along which the flexible containers are conveyed and the first plate is arranged on a second side of the horizontal path, and in the second welding station the second sonotrode is arranged on the second side of the horizontal path and the second plate is arranged on the first side of the horizontal path. The first sonotrode is pushed against the flexible container in a first direction of pressure and is vibrated in a first direction of vibration which is parallel to the first direction of pressure, and the second sonotrode is pushed against the flexible container in a second direction of pressure and is vibrated in a second direction of vibration which is parallel to the second direction of pressure.

Document DE102009043143A1 describes a welding unit for sealing flexible containers made of a heat-sealable film including a closure assembly. The welding unit comprises a welding device cooperating with a closure placement unit configured to place a closure assembly in an upper opening of each flexible container. The welding device comprises a first sonotrode and a second sonotrode in mutual cooperation arranged on opposite first and second sides of a horizontal path along which the flexible containers are conveyed. The first and second sonotrodes are pushed against opposite sides of the flexible container in opposite first and second directions of pressure and are vibrated in first and second directions of vibration which are parallel to the first and second directions of pressure.

Documents EP2263860A1, WO2014173735A1 and JP S59 178215 A disclose other welding units for sealing flexible containers made of a heat-sealable film including a closure assembly, with the welding units including first and second sonotrodes arranged on opposite first and second sides of a horizontal path along which the flexible containers are conveyed.

### Brief Description of the Invention

The present invention relates to an automatic horizontal packaging machine comprising, in a manner already known in the industry:
- a forming section for forming flexible containers from a continuous heat-sealable film, or a supply section for supplying flexible containers made of a heat-sealable film;
   a filling section including at least one filling unit filling the flexible containers through an upper opening formed between first and second opposite film walls of the flexible containers;
- a sealing section including a closure placement unit placing a closure assembly in said upper opening of each flexible container, positioning a base of said closure assembly between said first and second film walls, and a welding unit attaching the upper edges of the first and second film walls to first and second convex attachment surfaces provided on first and second opposite sides of said base of the closure assembly by welding; and
- conveyor means moving the flexible containers in a horizontal path along said filling section and said sealing section with stations in said filling unit, said closure placement unit and said welding unit.

Therefore, flexible containers made up of two flexible films attached to one another, except on the mentioned upper opening, are fed to the container filling section by means of the mentioned conveyor means, which thereby allows discharging a product into said flexible container through said upper opening, and retaining said product inside the container.

The conveyor means move the flexible containers along a path and they can be of a very different nature, being, for example, an assembly of pairs of clamps attached to a conveyor carousel made up, for example, of a belt which follows the path along which the flexible containers must be conveyed, even going through the different sections of the proposed automatic packaging machine, and then returns the pairs of clamps to the point of origin in a closed circuit. Each pair of clamps is intended for gripping a flexible container by two vertical edges, keeping it in place with the upper opening facing up and accessible. Other embodiments are possible, such as receptacles which are open in the upper portion thereof, inside which a single flexible container is deposited, the size and shape of the receptacle being such that said flexible container is retained with its upper opening facing up, the uncontrolled movement thereof being prevented. Said receptacles can be moved by means of a belt, pushed, driven, or moved by means of any other conveyor means. The examples described herein are merely illustrative and in no case represent limiting embodiments of the conveyor means.

Said flexible containers can be manufactured in the container forming section, where at least one flexible film is bent and welded such that it provides the described flexible containers, being able to also include cutting operations both before and after bending and/or welding, and the flexible containers are supplied to the conveyor device. Alternatively, the flexible containers are fed, either manually or automatically, to the conveyor device from a pre-manufactured flexible container storage.

Flexible containers provided with upper opening and already filled in the filling section are conveyed from said container filling section to the sealing section by the mentioned conveyor means.

In the sealing section, a closure placement unit automatically positions a closure assembly in said upper opening of each flexible container, positioning a base of said closure assembly between said first and second film walls. Typically, said closure assembly will include a base provided for being welded to the edge of the upper opening, thus completely blocking the upper opening and sealing the flexible container. Furthermore, the closure assembly will preferably also include a mouth in the form of a hole going through the base communicating the inside of the flexible receptacle with the outside and a cap for said mouth, which thereby allows opening or closing the mouth for accessing the content of the container for consumption.

The mentioned base of the closure assembly will have a first and second convex attachment surface on opposite sides and with coinciding ends, intended for being welded to the first and second films, at their end coinciding with the upper opening.

It is also proposed that the welding unit comprises, in a novel manner and according to a first aspect of the invention, a first welding station including a first ultrasonic welding device cooperating with the closure placement unit and comprising:
- a first sonotrode arranged on a first side of said horizontal path and ultrasonically welding, in cooperation with a first plate arranged on a second side of the horizontal path, the first film wall of the flexible container to said first convex attachment surface of the base of the closure assembly; and
a second welding station including a second ultrasonic welding device comprising:
- a second sonotrode arranged on the second side of the horizontal path and ultrasonically welding, in cooperation with a second plate arranged on the first side of the horizontal path, the second film wall of the flexible container to the second convex attachment surface of the base of the closure assembly;
wherein the first sonotrode presses said upper edge of the first film wall of the flexible container against the first convex attachment surface of the base of the closure assembly in a first direction of pressure and the first sonotrode cyclically shrinks and expands in a first direction of vibration which is perpendicular or tilted with respect to said first direction of pressure; and
wherein the second sonotrode presses said upper edge of the second film wall of the flexible container against the second convex attachment surface of the base of the closure assembly in a second direction of pressure and the second sonotrode cyclically shrinks and expands in a second direction of vibration which is perpendicular or tilted with respect to said second direction of pressure.

Therefore, the mentioned welding unit has a first and second welding station, each intended for welding one of the sides of the upper opening of the flexible containers on the base of the closure assembly previously placed in its final position with respect to the flexible container by means of a closure placement unit, for the two of them to completely weld the upper opening to the closure assembly sealing same.

Each welding station has a sonotrode and a plate which are arranged on opposite sides of the flexible container to be welded, with respect to the horizontal direction in which said containers are conveyed. The plate and sonotrode are placed such that said sonotrode presses the upper edge of one of the films of the flexible container against a convex attachment surface of the base of the closure assembly, while the plate presses it from an opposite side at the same time. Said pressure applied by the sonotrode is in a direction of pressure different from the direction in which the sonotrode cyclically expands and shrinks to produce its vibration.

Therefore, after passing through the first and second welding station, the two upper edges of the first and second films have been welded on the convex attachment surfaces of the base of the closure assembly and to one another.

Likewise, it is also proposed that the welding unit comprises, in a novel manner and according to a second aspect of the invention, a welding unit comprising an ultrasonic welding device cooperating with the closure placement unit and comprising:
- a first sonotrode arranged on a first side of said horizontal path ultrasonically welding the first film wall of the flexible container to said first convex attachment surface of the base of the closure assembly, in cooperation with a second sonotrode arranged on the second side of the horizontal path ultrasonically welding the second film wall of the flexible container to the second convex attachment surface of the base of the closure assembly;
wherein the first sonotrode presses said upper edge of the first film wall of the flexible container against the first convex attachment surface of the base of the closure assembly in a first direction of pressure and the first sonotrode cyclically shrinks and expands in a first direction of vibration which is perpendicular or tilted with respect to said first direction of pressure; and
wherein the second sonotrode presses said upper edge of the second film wall of the flexible container against the second convex attachment surface of the base of the closure assembly in a second direction of pressure and the second sonotrode cyclically shrinks and expands in a second direction of vibration which is perpendicular or tilted with respect to said second direction of pressure.

Therefore, the first and second aspects of the invention share the same operating principle, but differ in that the first aspect of the invention contemplates that each upper edge of the first and second films of one and the same flexible container is welded to a base of a closure assembly in a different welding station, each integrating a sonotrode in collaboration with a plate. In contrast, the second aspect of the invention contemplates that both upper edges of the first and second films of one and the same flexible container are welded on the base of the closure assembly in one and the same welding station through the action of two sonotrodes arranged on opposite sides of said flexible container, each responsible for welding one of the upper edges and without interaction with any plate whatsoever, but the features of the sonotrodes described in the first and second aspects of the invention being identical.

Therefore, the sonotrodes of both aspects of the invention share the feature referring to the fact the direction of vibration, expansion and retraction of a vibrating sonotrode is different from the direction of pressure in which the pressure is applied on the flexible film to be welded, said two directions preferably being perpendicular, but also being able to form an angle other than 90°, for example an angle between 45° and 90°.

This feature results from the fact that the surface to be welded is not flat, so applying vibration in a direction of vibration identical to the direction of pressure would not apply uniform welding on the entire surface.

Additionally, it is optionally proposed that the first sonotrode has a first concave contact surface complementary to said first convex attachment surface of the base of the closure assembly, and that the second sonotrode has a second concave contact surface complementary to said second convex attachment surface of the base of the closure assembly. A correct simultaneous contact of the entire upper edge to be welded with the convex attachment surface can therefore be achieved during the vibration welding operation.

According to another embodiment, the ultrasonic welding device or devices comprise a first movement device moving the first sonotrode between a first standby position, in which said first concave contact surface of the first sonotrode is separated from the first film wall of the flexible container, and a first welding position, in which the first concave contact surface of the first sonotrode presses said upper edges of the first film wall of the flexible container against the first convex attachment surface of the base of the closure assembly, and a second movement device moving the second sonotrode between a second standby position, in which said second concave contact surface of the second sonotrode is separated from the second film wall of the flexible container, and a second welding position, in which the second concave contact surface of the second sonotrode presses the upper edges of the second film wall of the flexible container against the second convex attachment surface of the base of the closure assembly. In other words, the mentioned movement devices interact with the sonotrodes to cause the movement thereof, positioning them in a welding position in which the mentioned welding takes place, and the standby position in which the sonotrodes are separated from the flexible container, allowing movement thereof through the action of the conveyor means, without any interference from the sonotrodes.

Additionally, it is also proposed that the closure placement unit, responsible for positioning the closure assemblies between the first and second films of the flexible container, and more specifically the attachment surfaces of the base between the upper edges of the mentioned films, comprises:
- a closure loader in which a plurality of closure assemblies are arranged,
- placement clamps mounted on a moving support,
- clamp actuation means moving the placement clamps between an open position and a closed position, and
- placement actuation means moving the moving support between a gripping position, in which the moving support keeps the placement clamps in a suitable position for gripping one of the closure assemblies arranged in said closure loader, and a welding position, in which the moving support maintains the placement clamps supporting the closure assembly with its base between the first and second film walls of the flexible container.

According to another additional embodiment, the closure placement unit has an outlet located above and aligned with the horizontal path, and said placement actuation means impart to the moving support a rotational movement about an axis perpendicular to the horizontal path between said gripping position and said welding position. The closure placement unit therefore grips a closure assembly from a position that is vertically aligned with its welding and inverted, turns said gripped closure assembly over and introduces it in the upper opening of a flexible container, keeping it in said position during the welding operations.

In an equivalent alternative mode, it is proposed that the closure placement unit has an outlet located above the horizontal path of the flexible containers and shifted towards the second side of said horizontal path, and said placement actuation means impart to the moving support a rotational movement about an axis perpendicular to the horizontal path in combination with a translational movement in a direction perpendicular to the horizontal path between said gripping position and said welding position. Therefore, in this embodiment the same result as in the preceding embodiment is produced as regards placing a closure assembly in the upper opening and holding it in said position during the welding operations, but said result is achieved by means of different movement operations, since the closure assemblies are supplied from one side of the flexible containers instead of from a position thereabove.

In the case of the first aspect of the invention described above whereby each sonotrode collaborates with a plate to produce the weld, it is proposed that the first plate presses said upper edges of the second film wall of the flexible container against the second convex attachment surface of the base of the closure assembly in a first direction of pressure, and the second plate presses the upper edges of the first film wall of the flexible container against the first convex attachment surface of the base of the closure assembly in a second direction of pressure.

Therefore, the plates apply pressure on the area to be welded in a direction of pressure identical to that that applied by the sonotrode with which they collaborate, but in opposite senses of direction such that the base and the upper edges of the films of the flexible container are retained between the pressure applied between each sonotrode and its corresponding plate, which allows welding same.

Likewise, it is proposed that the first plate has a first concave pressure surface complementary to said second convex attachment surface of the base of the closure assembly, and that the second plate has a second concave pressure surface complementary to the first convex attachment surface of the base of the closure assembly, thereby allowing the plate to be correctly supported against the base of the closure assembly.

Additionally, it is proposed that a first movement device moves the first plate between a first standby position, in which said first concave pressure surface of the first plate is separated from the second film wall of the flexible container, and a first welding position, in which the first concave pressure surface of the first plate presses said upper edge of the second film wall of the flexible container against the second convex attachment surface of the base of the closure assembly, and that a second movement device moves the second plate between a second standby position, in which said second concave pressure surface of the second plate is separated from the first film wall of the flexible container, and a second welding position, in which the second concave pressure surface of the second plate presses the upper edge of the first film wall of the flexible container against the first convex attachment surface of the base of the closure assembly.

Therefore, as a result of the movement devices the plates can be moved to press on the area to be welded or to move away from same, allowing movement of the flexible container. Said movement of the plates will preferably be coordinated with the movement of the corresponding sonotrodes.

It will be understood that references to geometric positions such as, for example, parallel, perpendicular, tangent, etc., allow deviations of up to ±5° with respect to the theoretical position defined by said nomenclature.

Other features of the invention will be described in the following detailed description of an embodiment.

### Brief Description of the Drawings

The foregoing and other advantages and features will be more clearly understood based on the following detailed description of an embodiment in reference to the attached drawings which must be interpreted in an illustrative and non-limiting manner, in which:
Figures 1, 2 and 3 are schematic cross-section views taken along a horizontal plane A (indicated in Figure 4) illustrating successive steps in the operation of a sealing section of an automatic horizontal packaging machine according to one embodiment of the present invention, according to a first aspect thereof;
Figure 4 is a side elevational view of a first ultrasonic welding device of the sealing section of Figure 1;
Figure 5 is a side elevational view of a first ultrasonic welding device according to another embodiment of the present invention and according to said first aspect thereof;
Figure 6 is a perspective view of a closure assembly according to one embodiment, which is coupled and ultrasonically welded to a flexible container in the sealing section of Figure 1;
Figure 7 is an exploded perspective view of the closure assembly of Figure 6;
Figure 8 is a perspective view of a flexible container with the closure assembly located in position before ultrasonic welding;
Figure 9 is a perspective view of the sealed flexible container with the closure assembly after ultrasonic welding.
Figure 10 is a complete perspective view of the sonotrode shown partially in Figure 4.
Figure 11 is a side elevational view of a welding station according to a second aspect of the invention, in which welding occurs simultaneously from opposite sides of the flexible container by means of two sonotrodes.

### Detailed Description of an Embodiment

The present invention relates to an automatic horizontal packaging machine. According to an illustrative and non-limiting embodiment, said packaging machine is provided with a container forming section (not shown), in which starting from a roll of flexible film, said material is bent in half, welding the two facing halves to one another, forming a plurality of containers similar to pouches, each provided with a first film 2 and a second film 3.

A non-welded opening is left in each formed container, leaving the inside of the receptacle accessible through said side. The containers are then separated by means of a cutting operation separating same, each flexible container 1 then being transferred to conveyor means (not shown).

Said conveyor means consist of a carousel formed by pairs of clamps 70. Each pair of clamps 70 holds a flexible container 1 by its two side edges, maintaining the opening of the container at its upper end. The mentioned carousel moves each flexible container 1 following a horizontal path T from the container forming section to a filling section (not shown).

In the mentioned filling section, each flexible container 1 is located below a discharge mouth, and the upper edge of the first and second films is then separated, defining the upper opening, thereby opening the mentioned upper opening of the flexible container 1 to then fill said flexible container 1 with a fluid product by means of discharging same through the mentioned discharge mouth.

The upper opening can be opened, for example, by means of moving the two clamps 70 of the conveyor means holding the flexible container 1 closer to one another.

After filling the flexible container 1, the mentioned conveyor means move the flexible container 1 to a sealing section 20 also following the mentioned horizontal path T.

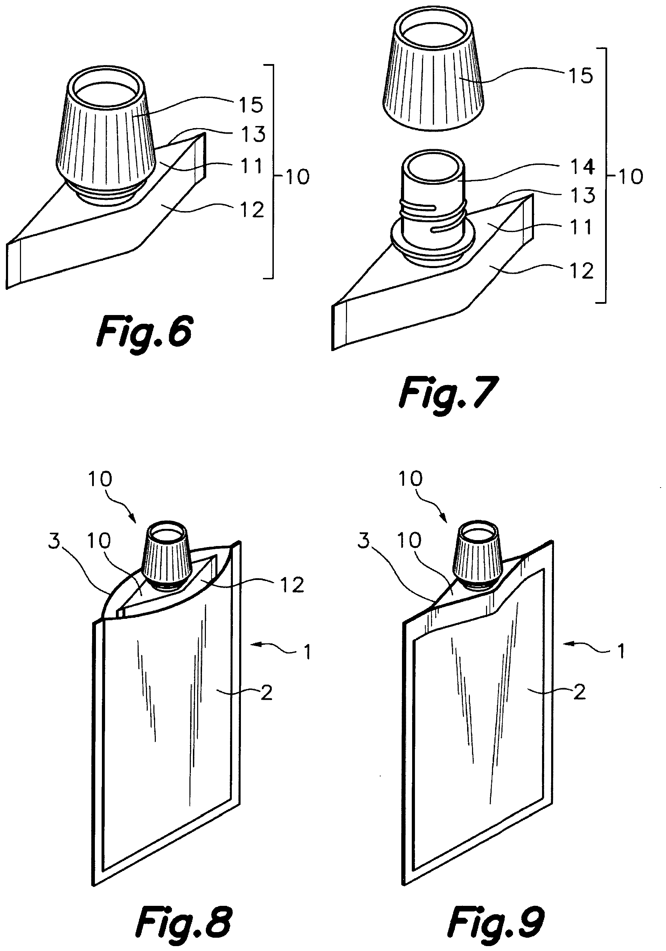

In the sealing section 20, a closure assembly 10 is inserted in the upper opening of the flexible container 1, in the position shown in Figure 8, and the upper edges of the first and second films 2 and 3 are then welded to said closure assembly 10 and to one another, thereby completely sealing the inside of the flexible container 1 and its content, as seen in Figure 9.

The closure assembly 10 can be, in an illustrative and non-limiting manner, like the one shown in Figures 6 and 7, in which the mentioned closure assembly 10 is shown to consist of a base 11 having a fusiform section defining a first and second convex attachment surface 12 and 13 on opposite sides, converging at the ends thereof. A cylindrical hole ending with a threaded protruding mouth 14 goes through the widest area of said fusiform base 11. A threaded cap 15 completes the closure assembly.

Said insertion of the closure assembly 10 in the upper opening takes place by means of a closure placement unit 30 responsible for collecting a closure assembly 10 from a closure loader 31 or dispenser and conveying it and holding it between the upper edges of the first and second films 2 and 3 of the flexible container 1 during the welding operations.

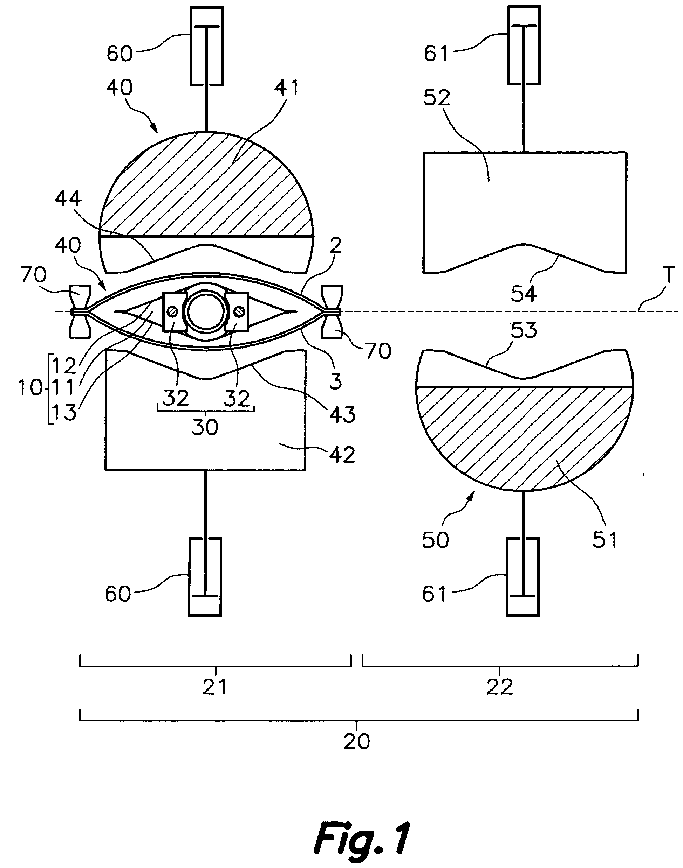

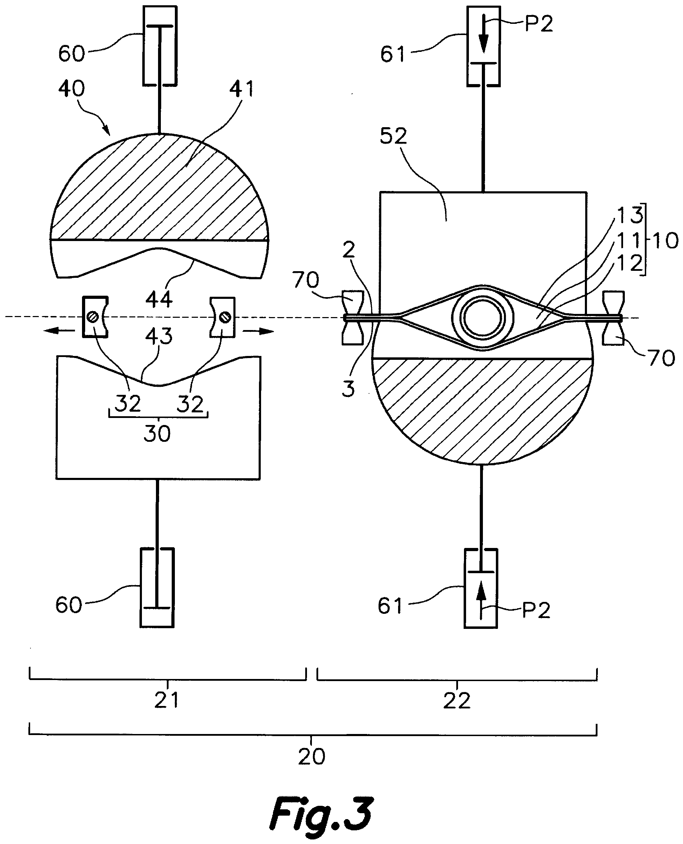

According to a first aspect of the invention shown with an illustrative and non-limiting character in the attached Figures 1, 2 and 3, the sealing section 20 consists of a first and second welding station 21 and 22, arranged consecutively along the horizontal path T of the flexible containers 1 moved by the conveyor means.

The first welding station 21 is the responsible for welding the upper edge of the first film 2 to a first convex attachment surface 12 of the base 11 of the closure assembly 10 by means of ultrasound. Said first welding station 21 consists of a first ultrasonic welding device 40 provided with a first sonotrode 41 arranged on a first side of the flexible container 1, with respect to the horizontal path T, with a first concave contact surface 44 facing the upper edge of the first film to be welded, and a first plate 42 arranged on a second side, opposite the first side, of the flexible container 1 with respect to the horizontal path T, the first plate 42 facing the upper edge of the second film 3.

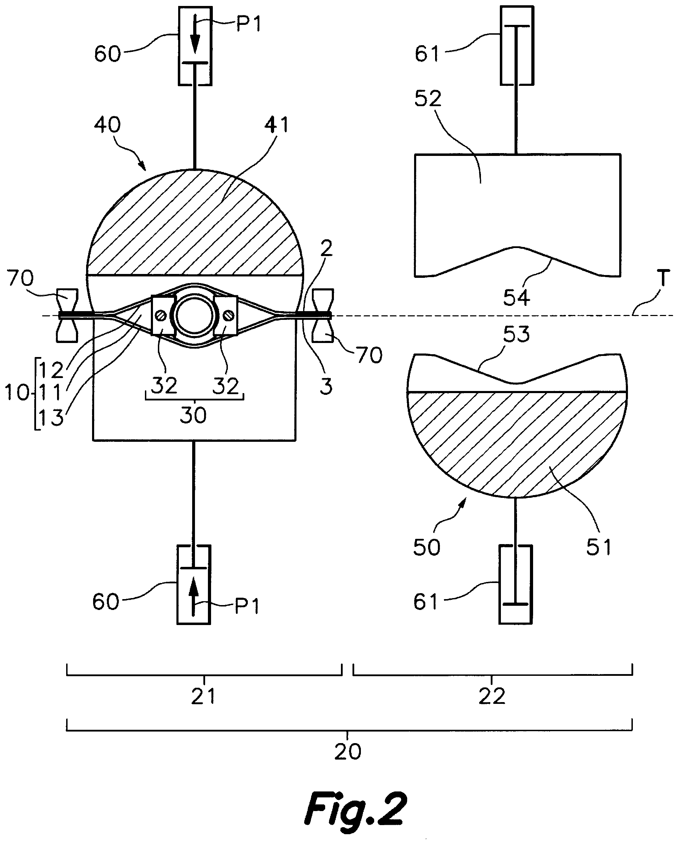

The first plate 42 and the first sonotrode 41 have first movement devices 60 moving them from a first standby position, shown in Figure 1, in which said first sonotrode 41 and plate 42 are separated from the flexible container 1 to be welded, and a first welding position, shown in Figure 2, in which the first sonotrode 41 and the first plate 42 push the upper edges of the first and second films 2 and 3 against the convex attachment surfaces 12 and 13 of the base 11 of the closure assembly 10 in a first direction of pressure P1, which will preferably be a direction perpendicular to the horizontal path T.

After the ultrasonic welding of said upper edge of the first film 2 to the first convex attachment surface 12 of the base 11 of the closure assembly 10, the conveyor means move the flexible container 1 in the horizontal path T to the second welding station 22.

Said second welding station 22 includes a second ultrasonic welding station 50 provided with a second sonotrode 51 facing the upper edge of the second film 3 of the flexible container 1, and a second plate 52 facing the upper edge of the first film 2 of the flexible container 1, said second sonotrode 51 and said second plate 52 being movable by second movement devices 61 between a standby position, in which they are separated form the flexible container 1, and a second welding position, in which they press the upper edges of the first and second flexible films 2 and 3 against the convex attachment surfaces 12 and 13 of the base 11 of the closure assembly 10 in a second direction of pressure P2 parallel to the first direction of pressure P1, causing the ultrasonic welding of the upper edge of the second film 3 on the second convex attachment surface 13 of the base 11 of the closure assembly 10 and on the upper edge of the first film 2.

After said welding, the movement devices move said second sonotrode 51 and second plate 52 to the standby position releasing the flexible container 1 to it to be moved by the conveyor means.

In a second aspect of the proposed invention, the sealing section 20 has a single welding station in which the upper edge of the first and the second films 2 and 3 are simultaneously welded to both convex attachment surfaces 12 and 13 of the base 11 of the closure assembly 10 from opposite sides of the horizontal path T of the flexible container 1, by means of first and second sonotrodes 41 and 51 identical to those described above as regards the first aspect of the invention. Said first and second sonotrodes 41 and 51 of the second aspect of the invention also have first and second movement devices 60 and 61 moving them between the standby positions in which they are separated from the flexible container 1, and the welding position in which the concave contact surface 44 of the first sonotrode 41 presses the upper edge of the first film 2 against the first convex attachment surface 12 of the base 11. Similarly, the concave contact surface 53 of the second sonotrode 51 presses the upper edge of the second film 3 against the second convex attachment surface 13 of the base 11.

The assembly of the two sonotrodes 41 and 51 acting from opposite sides of the flexible container 1 causes complete welding of the flexible container 1 and sealing thereof.

Both in the first aspect and in the second aspect of the invention, all the described sonotrodes 41 and 51 have a direction of vibration D1 and D2 in which the mentioned first and second sonotrodes 41 and 51 expand and shrink during their vibration cycle. It is proposed that said direction of vibration D1 and D2 is a direction different from the direction of pressure P1 and P2 described above in which the first and second films 2 and 3 are pressed against the first and second convex attachment surfaces 12 and 13.

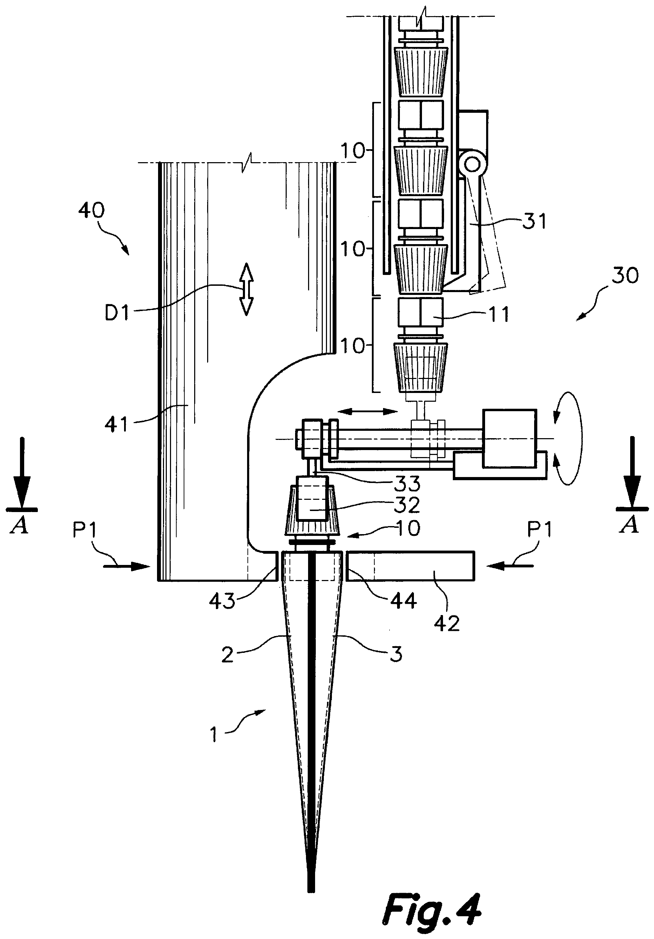

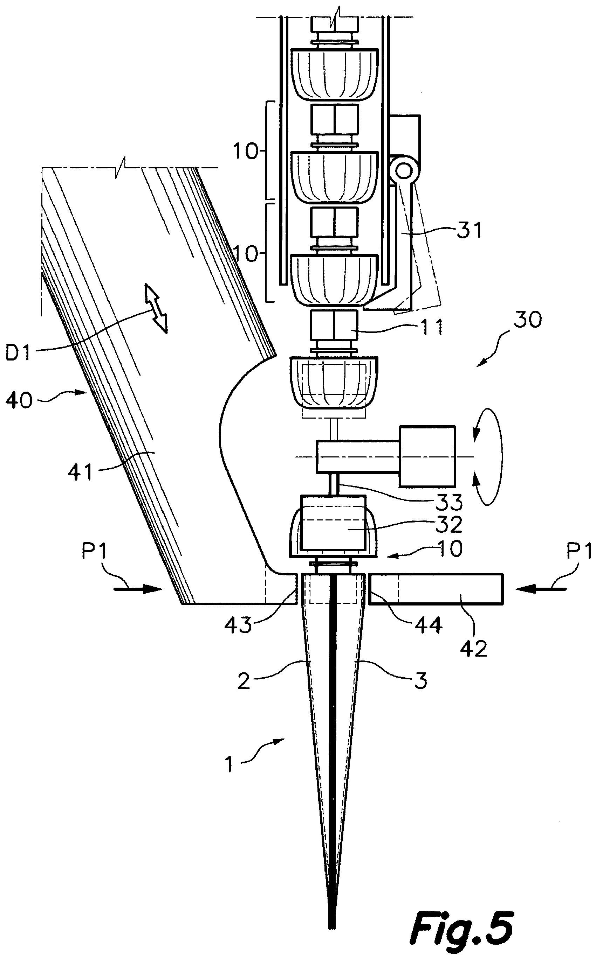

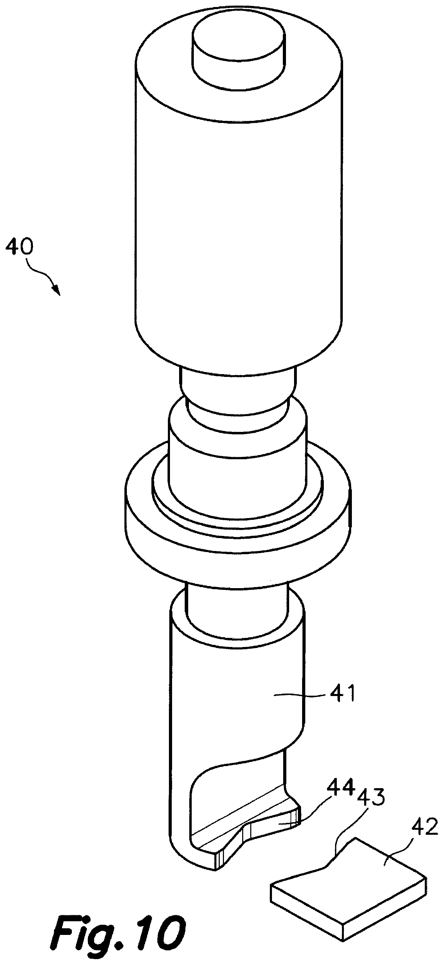

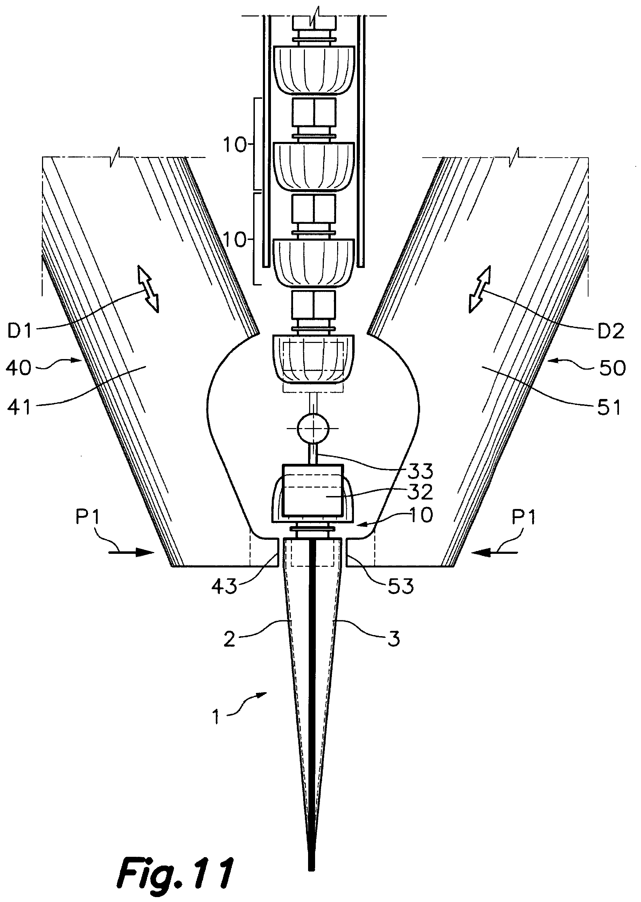

Said direction of vibration D1 and D2 can be perpendicular to the direction of pressure P1 and P2, as shown in Figures 4 and 10, or form a different angle comprised between 45° and 90° with respect to said direction of pressure P1 and P2, as shown in Figures 5 and 11.

The closure placement unit 30 generically described above can have different specific embodiments which will be adapted to the available space left by the sonotrodes 41 and 51, depending on the number and position thereof, such as for example, those shown in Figures 4, 5 and 11.

The example of Figure 4 shows a first welding station 21 provided with only a first sonotrode 41 with a direction of vibration D1 perpendicular to the direction of pressure P1. In this example, the space above the upper opening of the flexible container 1 is partially occupied by the sonotrode 41, so the supply of the closure assemblies 10 has been shifted towards one side. Therefore, in this case the closure placement unit 30 must collect a closure assembly 10 from said side position, move it and rotate it until positioning it between the first and second films 2 and 3.

In the example shown in Figure 5, in contrast, the sonotrode 41 is tilted, leaving the space above the upper opening of the flexible container 1 free, so the closure assemblies 10 are supplied by the closure carrier 31 from a position vertically aligned with the upper opening of the flexible container 1, so the closure placement unit 30 only has to collect a closure assembly 10 and turn it around in order to position it between the first and second films 2 and 3.

In the example shown in Figure 11, the mechanism of the closure placement unit 30 is the same as that shown in Figure 5, but in this case there are two sonotrodes 41 and 51 arranged symmetrically on both sides of the flexible container 1, the axis of rotation of the closure placement unit 30 must be parallel to the horizontal path T so that the operating shaft does not interfere with the mentioned sonotrodes 41 and 51.

## Claims

1. An automatic horizontal packaging machine, comprising:
a forming section for forming flexible containers (1) from a continuous heat-sealable film, or a supply section for supplying flexible containers (1) made of a heat-sealable film;
a filling section including at least one filling unit filling the flexible containers (1) through an upper opening formed between first and second opposite film walls (2, 3) of the flexible containers (1);
a sealing section (20) including a closure placement unit (30) placing a closure assembly (10) in said upper opening of each flexible container (1), positioning a base (11) of said closure assembly (10) between said first and second film walls (2, 3), and a welding unit attaching the upper edges of the first and second film walls (2, 3) to first and second convex attachment surfaces (12, 13) provided on first and second opposite sides of said base (11) of the closure assembly (10) by welding; and
conveyor means moving the flexible containers (1) in a horizontal path (T) along said filling section and said sealing section (20) with stations in said filling unit, said closure placement unit (30) and said welding unit;
wherein the welding unit comprises a first welding station including a first ultrasonic welding device (40) cooperating with the closure placement unit (30) and comprising:
a first sonotrode (41) arranged on a first side of said horizontal path (T) and ultrasonically welding, in cooperation with a first plate (42) arranged on a second side of the horizontal path (T), the first film wall (2) of the flexible container (1) to said first convex attachment surface (12) of the base (11) of the closure assembly (10);
and a second welding station including a second ultrasonic welding device (50) comprising:
a second sonotrode (51) arranged on the second side of the horizontal path (T) and ultrasonically welding, in cooperation with a second plate (52) arranged on the first side of the horizontal path (T), the second film wall (3) of the flexible container (1) to the second convex attachment surface (13) of the base (11) of the closure assembly (10);
**characterized in that**:
the first sonotrode (41) presses said upper edge of the first film wall (2) of the flexible container (1) against the first convex attachment surface (12) of the base (11) of the closure assembly (10) in a first direction of pressure (P1) and the first sonotrode (41) cyclically shrinks and expands in a first direction of vibration (D1) which is perpendicular or tilted with respect to said first direction of pressure (P1); and
the second sonotrode (51) presses said upper edge of the second film wall (3) of the flexible container (1) against the second convex attachment surface (13) of the base (11) of the closure assembly (10) in a second direction of pressure (P2) and the second sonotrode (51) cyclically shrinks and expands in a second direction of vibration (D2) which is perpendicular or tilted with respect to said second direction of pressure (P2).

2. An automatic horizontal packaging machine, comprising
a forming section for forming flexible containers (1) from a continuous heat-sealable film, or a supply section for supplying flexible containers (1) made of a heat-sealable film;
a filling section including at least one filling unit filling the flexible containers (1) through an upper opening formed between first and second opposite film walls (2, 3) of the flexible containers (1);
a sealing section (20) including a closure placement unit (30) placing a closure assembly (10) in said upper opening of each flexible container (1), positioning a base (11) of said closure assembly (10) between said first and second film walls (2, 3), and a welding unit attaching the upper edges of the first and second film walls (2, 3) to first and second convex attachment surfaces (12, 13) provided on first and second opposite sides of said base (11) of the closure assembly (10) by welding; and
conveyor means moving the flexible containers (1) in a horizontal path (T) along said filling section and said sealing section (20) with stations in said filling unit, said closure placement unit (30) and said welding unit;
wherein the welding unit comprises an ultrasonic welding device (40) cooperating with the closure placement unit (30) and comprising:
a first sonotrode (41) arranged on a first side of said horizontal path (T) ultrasonically welding the first film wall (2) of the flexible container (1) to said first convex attachment surface (12) of the base (11) of the closure assembly (10), in cooperation with a second sonotrode (51) arranged on the second side of the horizontal path (T) ultrasonically welding the second film wall (3) of the flexible container (1) to the second convex attachment surface (13) of the base (11) of the closure assembly (10);
**characterized in that**:
the first sonotrode (41) presses said upper edge of the first film wall (2) of the flexible container (1) against the first convex attachment surface (12) of the base (11) of the closure assembly (10) in a first direction of pressure (P1) and the first sonotrode (41) cyclically shrinks and expands in a first direction of vibration (D1) which is perpendicular or tilted with respect to said first direction of pressure (P1); and
the second sonotrode (51) presses said upper edge of the second film wall (3) of the flexible container (1) against the second convex attachment surface (13) of the base (11) of the closure assembly (10) in a second direction of pressure (P2) and the second sonotrode (51) cyclically shrinks and expands in a second direction of vibration (D2) which is perpendicular or tilted with respect to said second direction of pressure (P2).

3. The automatic horizontal packaging machine according to claim 1 or 2, **characterized in that** the first sonotrode (41) has a first concave contact surface (44) complementary to said first convex attachment surface (12) of the base (11) of the closure assembly (10), and the second sonotrode (51) has a second concave contact surface (53) complementary to said second convex attachment surface (13) of the base (11) of the closure assembly (10).

4. The automatic horizontal packaging machine according to claim 3, **characterized in that** the ultrasonic welding device or devices (40, 50) comprise a first movement device moving the first sonotrode (41) between a first standby position, in which said first concave contact surface (44) of the first sonotrode (41) is separated from the first film wall (2) of the flexible container (1), and a first welding position, in which the first concave contact surface (44) of the first sonotrode (41) presses said upper edges of the first film wall (2) of the flexible container (1) against the first convex attachment surface (12) of the base (11) of the closure assembly (10), and a second movement device moving the second sonotrode (51) between a second standby position, in which said second concave contact surface (53) of the second sonotrode (51) is separated from the second film wall (3) of the flexible container (1), and a second welding position, in which the second concave contact surface (53) of the second sonotrode (51) presses the upper edges of the second film wall (3) of the flexible container (1) against the second convex attachment surface (13) of the base (11) of the closure assembly (10).

5. The automatic horizontal packaging machine according to any one of the preceding claims, **characterized in that** the closure placement unit (30) comprises a closure loader (31) in which there are arranged a plurality of closure assemblies (10), placement clamps (32) mounted on a moving support (33), clamp actuation means moving the placement clamps (32) between an open position and a closed position, and placement actuation means moving the moving support (33) between a gripping position, in which the moving support (33) keeps the placement clamps (32) in a suitable position for gripping one of the closure assemblies (10) arranged in said closure loader (31), and a welding position, in which the moving support (33) maintains the placement clamps (32) supporting the closure assembly (10) with its base (11) between the first and second film walls (2, 3) of the flexible container (10).

6. The automatic horizontal packaging machine according to claim 5, **characterized in that** the closure placement unit (30) has an outlet located above and aligned with the horizontal path (T), and said placement actuation means impart to the moving support (33) a rotational movement about an axis perpendicular to the horizontal path (T) between said gripping position and said welding position.

7. The automatic horizontal packaging machine according to claim 5, **characterized in that** the closure placement unit (30) has an outlet located above the horizontal path (T) and shifted towards the second side of the horizontal path (T), and said placement actuation means impart to the moving support (33) a rotational movement about an axis perpendicular to the horizontal path (T) in combination with a translational movement in a direction perpendicular to the horizontal path (T) between said gripping position and said welding position.

8. The automatic horizontal packaging machine according to claim 1, **characterized in that** the first plate (42) presses said upper edges of the second film wall (3) of the flexible container (1) against the second convex attachment surface (13) of the base (11) of the closure assembly (10) in said first direction of pressure (P1), and the second plate (52) presses the upper edges of the first film wall (2) of the flexible container (1) against the first convex attachment surface (12) of the base (11) of the closure assembly (10) in said second direction of pressure (P2).

9. The automatic horizontal packaging machine according to claim 1 or 8, **characterized in that** the first plate (42) has a first concave pressure surface (43) complementary to said second convex attachment surface (13) of the base (11) of the closure assembly (10), and the second plate (52) has a second concave pressure surface (54) complementary to the first convex attachment surface (12) of the base (11) of the closure assembly (10).

10. The automatic horizontal packaging machine according to claim 9, **characterized in that** a first movement device moves the first plate (42) between a first standby position, in which said first concave pressure surface (43) of the first plate (42) is separated from the second film wall (3) of the flexible container (1), and a first welding position, in which the first concave pressure surface (43) of the first plate (42) presses said upper edge of the second film wall (3) of the flexible container (1) against the second convex attachment surface (13) of the base (11) of the closure assembly (10), and a second movement device moves the second plate (52) between a second standby position, in which said second concave pressure surface (54) of the second plate (52) is separated from the first film wall (2) of the flexible container (1), and a second welding position, in which the second concave pressure surface (54) of the second plate (52) presses the upper edge of the first film wall (2) of the flexible container (1) against the first convex attachment surface (12) of the base (11) of the closure assembly (10).

## Patentansprüche

1. Horizontale automatische Verpackungsmaschine, umfassend:
einen Formgebungsabschnitt zum Formen von flexiblen Behältern (1) aus einer durchgängigen heißsiegelbaren Folie, oder einen Zuführungsabschnitt zum Zuführen von flexiblen Behältern (1) hergestellt aus einer heißsiegelbaren Folie;
einen Füllabschnitt beinhaltend mindestens eine Fülleinheit, welche die flexiblen Behälter (1) über eine obere Öffnung füllt, welche zwischen ersten und zweiten gegenüberliegenden Folienwänden (2, 3) der flexiblen Behälter (1) gebildet ist;
einen Abdichtabschnitt (20) beinhaltend eine Verschlussplatzierungseinheit (30), welche eine Verschlussbaugruppe (10) in der genannten oberen Öffnung jedes flexiblen Behälters (1) platziert, so dass eine Basis (11) der genannten Verschlussbaugruppe (10) zwischen den genannten ersten und zweiten Folienwänden (2, 3) positioniert wird, und eine Schweißeinheit, welche die oberen Ränder der ersten und zweiten Folienwände (2, 3) an ersten und zweiten konvexen Befestigungsflächen (12, 13) mittels Schweißens befestigt, wobei die ersten un zweiten konvexen Befestigungsfläschen (12, 13) auf ersten und zweiten gegenüberliegenden Seiten der genannten Basis (11) der Verschlussbaugruppe (10) vorgesehen sind; und
Fördermittel, welche die flexiblen Behälter (1) in einer horizontalen Bahn (T) entlang des genannten Füllabschnitts und des genannten Abdichtabschnitts (20) mit Stationen in der genannten Fülleinheit, der genannten Verschlussplatzierungseinheit (30) und der genannten Schweißeinheit bewegt;
wobei die Schweißeinheit eine erste Schweißstation umfasst, beinhaltend eine erste Ultraschallschweißvorrichtung (40), welche mit der Verschlussplatzierungseinheit (30) zusammenarbeitet und Folgendes umfasst:
eine erste Sonotrode (41), welche auf einer ersten Seite der genannten horizontalen Bahn (T) angeordnet ist und, in Zusammenarbeit mit einer ersten Platte (42), welche auf einer zweiten Seite der horizontalen Bahn (T) angeordnet ist, die erste Folienwand (2) des flexiblen Behälters (1) mit der genannten ersten konvexen Befestigungsfläche (12) der Basis (11) der Verschlussbaugruppe (10) mittels Ultraschallschweißen verbindet;
und eine zweite Schweißstation beinhaltend eine zweite Ultraschallschweißvorrichtung (50) umfassend:
eine zweite Sonotrode (51), welche auf der zweiten Seite der horizontalen Bahn (T) angeordnet ist und, in Zusammenarbeit mit einer zweiten Platte (52), welche auf der ersten Seite der horizontalen Bahn (T) angeordnet ist, die zweite Folienwand (3) des flexiblen Behälters (1) mit der zweiten konvexen Befestigungsfläche (13) der Basis (11) der Verschlussbaugruppe (10) mittels Ultraschallschweißen verbindet;
**dadurch gekennzeichnet, dass**:
die erste Sonotrode (41) den genannten oberen Rand der ersten Folienwand (2) des flexiblen Behälters (1) gegen die erste konvexe Befestigungsfläche (12) der Basis (11) der Verschlussbaugruppe (10) in eine erste Druckrichtung (P1) drückt und die erste Sonotrode (41) zyklisch schrumpft und sich ausdehnt, in einer ersten Vibrationsrichtung (D1), welche senkrecht oder geneigt in Bezug auf die genannte erste Druckrichtung (P1) ist; und
die zweite Sonotrode (51) den genannten oberen Rand der zweiten Folienwand (3) des flexiblen Behälters (1) gegen die zweite konvexe Befestigungsfläche (13) der Basis (11) der Verschlussbaugruppe (10) in eine zweite Druckrichtung (P2) drückt und die zweite Sonotrode (51) zyklisch schrumpft und sich ausdehnt, in einer zweiten Vibrationsrichtung (D2), welche senkrecht oder geneigt in Bezug auf die genannte zweite Druckrichtung (P2) ist.

2. Horizontale automatische Verpackungsmaschine, umfassend
einen Formgebungsabschnitt zum Formen von flexiblen Behältern (1) aus einer durchgängigen heißsiegelbaren Folie, oder einen Zuführungsabschnitt zum Zuführen von flexiblen Behältern (1) hergestellt aus einer heißsiegelbaren Folie;
einen Füllabschnitt beinhaltend mindestens eine Fülleinheit, welche die flexiblen Behälter (1) über eine obere Öffnung füllt, welche zwischen ersten und zweiten gegenüberliegenden Folienwänden (2, 3) der flexiblen Behälter (1) gebildet ist; einen Abdichtabschnitt (20) beinhaltend eine Verschlussplatzierungseinheit (30), welche eine Verschlussbaugruppe (10) in der genannten oberen Öffnung jedes flexiblen Behälters (1) platziert, so dass eine Basis (11) der genannten Verschlussbaugruppe (10) zwischen den genannten ersten und zweiten Folienwänden (2, 3) positioniert wird, und eine Schweißeinheit, welche die oberen Ränder der ersten und zweiten Folienwände (2, 3) an ersten und zweiten konvexen Befestigungsflächen (12, 13) mittels Schweißens befestigt, welche auf ersten und zweiten gegenüberliegenden Seiten der genannten Basis (11) der Verschlussbaugruppe (10) vorgesehen sind; und
Fördermittel, welche die flexiblen Behälter (1) in einer horizontalen Bahn (T) entlang des genannten Füllabschnitts und des genannten Abdichtabschnitts (20) mit Stationen in der genannten Fülleinheit, der genannten Verschlussplatzierungseinheit (30) und der genannten Schweißeinheit bewegen;
wobei die Schweißeinheit eine Ultraschallschweißvorrichtung (40) umfasst, welche mit der Verschlussplatzierungseinheit (30) zusammenarbeitet und Folgendes umfasst:
eine erste Sonotrode (41), welche auf einer ersten Seite der genannten horizontalen Bahn (T) angeordnet ist und die erste Folienwand (2) des flexiblen Behälters (1) mit der genannten ersten konvexen Befestigungsfläche (12) der Basis (11) der Verschlussbaugruppe (10) mittels Ultraschallschweißen verbindet, in Zusammenarbeit mit einer zweiten Sonotrode (51), welche auf der zweiten Seite der horizontalen Bahn (T) angeordnet ist und die zweite Folienwand (3) des flexiblen Behälters (1) mit der zweiten konvexen Befestigungsfläche (13) der Basis (11) der Verschlussbaugruppe (10) mittels Ultraschallschweißen verbindet;
**dadurch gekennzeichnet, dass**:
die erste Sonotrode (41) den genannten oberen Rand der ersten Folienwand (2) des flexiblen Behälters (1) gegen die erste konvexe Befestigungsfläche (12) der Basis (11) der Verschlussbaugruppe (10) in eine erste Druckrichtung (P1) drückt und die erste Sonotrode (41) zyklisch schrumpft und sich ausdehnt, in einer ersten Vibrationsrichtung (D1), welche senkrecht oder geneigt in Bezug auf die genannte erste Druckrichtung (P1) ist; und
die zweite Sonotrode (51) den genannten oberen Rand der zweiten Folienwand (3) des flexiblen Behälters (1) gegen die zweite konvexe Befestigungsfläche (13) der Basis (11) der Verschlussbaugruppe (10) in eine zweite Druckrichtung (P2) drückt und die zweite Sonotrode (51) zyklisch schrumpft und sich ausdehnt, in einer zweiten Vibrationsrichtung (D2), welche senkrecht oder geneigt in Bezug auf die genannte zweite Druckrichtung (P2) ist.

3. Horizontale automatische Verpackungsmaschine nach Anspruch 1 oder 2, **dadurch gekennzeichnet, dass** die erste Sonotrode (41) eine erste konkave Kontaktfläche (44) aufweist, welche komplementär zur genannten ersten konvexen Befestigungsfläche (12) der Basis (11) der Verschlussbaugruppe (10) ist, und die zweite Sonotrode (51) eine zweite konkave Kontaktfläche (53) aufweist, welche komplementär zur genannten zweiten konvexen Befestigungsfläche (13) der Basis (11) der Verschlussbaugruppe (10) ist.

4. Horizontale automatische Verpackungsmaschine nach Anspruch 3, **dadurch gekennzeichnet, dass** die Ultraschallschweißvorrichtung oder -vorrichtungen (40, 50) eine erste Bewegungsvorrichtung umfasst/umfassen, welche die erste Sonotrode (41) zwischen einer ersten Wartestellung, in welcher die genannte erste konkave Kontaktfläche (44) der ersten Sonotrode (41) von der ersten Folienwand (2) des flexiblen Behälters (1) getrennt ist, und einer ersten Schweißstellung, in welcher die erste konkave Kontaktfläche (44) der ersten Sonotrode (41) die genannten oberen Ränder der ersten Folienwand (2) des flexiblen Behälters (1) gegen die erste konvexe Befestigungsfläche (12) der Basis (11) der Verschlussbaugruppe (10) drückt, bewegt, und eine zweite Bewegungsvorrichtung umfasst/umfassen, welche die zweite Sonotrode (51) zwischen einer zweiten Wartestellung, in welcher die genannte zweite konkave Kontaktfläche (53) der zweiten Sonotrode (51) von der zweiten Folienwand (3) des flexiblen Behälters (1) getrennt ist, und einer zweiten Schweißstellung, in welcher die zweite konkave Kontaktfläche (53) der zweiten Sonotrode (51) die oberen Ränder der zweiten Folienwand (3) des flexiblen Behälters (1) gegen die zweite konvexe Befestigungsfläche (13) der Basis (11) der Verschlussbaugruppe (10) drückt, bewegt.

5. Horizontale automatische Verpackungsmaschine nach einem der vorhergehenden Ansprüche, **dadurch gekennzeichnet, dass** die Verschlussplatzierungseinheit (30) einen Verschlussbelader (31) umfasst, in welchem eine Vielzahl von Verschlussbaugruppen (10), Platzierungsklemmen (32), welche auf einer beweglichen Stütze (33) gelagert sind, Klemmenbetätigungsmittel, welche die Platzierungsklemmen (32) zwischen einer offenen Stellung und einer geschlossenen Stellung bewegen, und Platzierungsbetätigungsmittel, welche die bewegliche Stütze (33) zwischen einer Greifstellung, in welcher die bewegliche Stütze (33) die Platzierungsklemmen (32) in einer geeigneten Stellung zum Greifen einer der im genannten Verschlussbelader (31) angeordneten Verschlussbaugruppen (10) hält, und einer Schweißstellung, in welcher die bewegliche Stütze (33) die Platzierungsklemmen (32), welche die Verschlussbaugruppe (10) mit deren Basis (11) zwischen den ersten und zweiten Folienwänden (2, 3) des flexiblen Behälters (10) hält, angeordnet ist.

6. Horizontale automatische Verpackungsmaschine nach Anspruch 5, **dadurch gekennzeichnet, dass** die Verschlussplatzierungseinheit (30) einen Ausgang aufweist, welcher über der horizontalen Bahn (T) liegt und damit ausgerichtet ist, und die genannten Platzierungsbetätigungsmittel der beweglichen Stütze (33) eine Drehbewegung um eine zur horizontalen Bahn (T) senkrechten Achse herum zwischen der genannten Greifstellung und der genannten Schweißstellung verleihen.

7. Horizontale automatische Verpackungsmaschine nach Anspruch 5, **dadurch gekennzeichnet, dass** die Verschlussplatzierungseinheit (30) einen Ausgang aufweist, welcher über der horizontalen Bahn (T) liegt und zur zweiten Seite der horizontalen Bahn (T) hin versetzt ist, und die genannten Platzierungsbetätigungsmittel der beweglichen Stütze (33) eine Drehbewegung um eine zur horizontalen Bahn (T) senkrechten Achse herum in Kombination mit einer translatorischen Bewegung in einer zur horizontalen Bahn (T) senkrechten Richtung zwischen der genannten Greifstellung und der genannten Schweißstellung verleihen.

8. Horizontale automatische Verpackungsmaschine nach Anspruch 1, **dadurch gekennzeichnet, dass** die erste Platte (42) die genannten oberen Ränder der zweiten Folienwand (3) des flexiblen Behälters (1) gegen die zweite konvexe Befestigungsfläche (13) der Basis (11) der Verschlussbaugruppe (10) in die genannte erste Druckrichtung (P1) drückt, und die zweite Platte (52) die oberen Ränder der ersten Folienwand (2) des flexiblen Behälters (1) gegen die erste konvexe Befestigungsfläche (12) der Basis (11) der Verschlussbaugruppe (10) in die genannte zweite Druckrichtung (P2) drückt.

9. Horizontale automatische Verpackungsmaschine nach Anspruch 1 oder 8, **dadurch gekennzeichnet, dass** die erste Platte (42) eine erste konkave Druckfläche (43) aufweist, welche komplementär zur genannten zweiten konvexen Befestigungsfläche (13) der Basis (11) der Verschlussbaugruppe (10) ist, und die zweite Platte (52) eine zweite konkave Druckfläche (54) aufweist, welche komplementär zur ersten konvexen Befestigungsfläche (12) der Basis (11) der Verschlussbaugruppe (10) ist.

10. Horizontale automatische Verpackungsmaschine nach Anspruch 9, **dadurch gekennzeichnet, dass** eine erste Bewegungsvorrichtung die erste Platte (42) zwischen einer ersten Wartestellung, in welcher die genannte erste konkave Druckfläche (43) der ersten Platte (42) von der zweiten Folienwand (3) des flexiblen Behälters (1) getrennt ist, und eine erste Schweißstellung, in welcher die erste konkave Druckfläche (43) der ersten Platte (42) den genannten oberen Rand der zweiten Folienwand (3) des flexiblen Behälters (1) gegen die zweite konvexe Befestigungsfläche (13) der Basis (11) der Verschlussbaugruppe (10) drückt, bewegt, und eine zweite Bewegungsvorrichtung die zweite Platte (52) zwischen einer zweiten Wartestellung, in welcher die genannte zweite konkave Druckfläche (54) der zweiten Platte (52) von der ersten Folienwand (2) des flexiblen Behälters (1) getrennt ist, und einer zweiten Schweißstellung, in welcher die zweite konkave Druckfläche (54) der zweiten Platte (52) den oberen Rand der ersten Folienwand (2) des flexiblen Behälters (1) gegen die erste konvexe Befestigungsfläche (12) der Basis (11) der Verschlussbaugruppe (10) drückt, bewegt.

## Revendications

1. une machine à conditionner horizontale, automatique, comportant :
une section de formation pour former des conteneurs flexibles (1) à partir d'un film continu thermosoudable, ou une section d'alimentation pour alimenter des conteneurs flexibles (1) faits en un film thermosoudable ;
une section de remplissage comprenant au moins une unité de remplissage remplissant les conteneurs flexibles (1) à travers une ouverture supérieure formée entre les première et deuxième parois opposées du film (2,3) des conteneurs flexibles (1) ;
une section de soudage (20) comprenant une unité de placement de fermeture (30) plaçant un ensemble de fermeture (10) dans cette ouverture supérieure de chaque conteneur flexible (1), en positionnant une base (11) de cet ensemble de fermeture (10) entre ces première et deuxième parois du film (2,3), et une unité de soudage attachant les bords supérieurs des première et deuxième parois du film (2,3) aux première et deuxième surfaces d'attache convexes (12,13) prévues sur les premier et deuxième côtés opposés de cette base (11) de l'ensemble de fermeture (10) par soudage ; et
des moyens convoyeurs déplaçant les conteneurs flexibles (1) sur une trajectoire horizontale (T), le long de cette section de remplissage et cette section de soudage (20) avec des groupes dans cette unité de remplissage, cette unité de placement de fermeture (30) et cette unité de soudage ;
dans laquelle l'unité de soudage comporte un premier groupe de soudage comprenant un premier dispositif de soudage par ultrasons (40) coopérant avec l'unité de placement de fermeture (30) et comportant :
une première sonotrode (41) aménagée sur un premier côté de cette trajectoire horizontale (T) et soudée par ultrasons, en coopération avec une première plaque (42) aménagée sur un deuxième côté de la trajectoire horizontale (T), la première paroi du film (2) du conteneur flexible (1) à cette première surface d'attache convexe (12) de la base (11) de l'ensemble de fermeture (10) ;
et un deuxième groupe de soudage comprenant un deuxième dispositif de soudage par ultrasons (50) comportant :
une deuxième sonotrode (51) aménagée sur le deuxième côté de la trajectoire horizontale (T) et soudant par ultrasons, en coopération avec une deuxième plaque (52) aménagée sur le premier côté de la trajectoire horizontale (T), la deuxième paroi du film (3) du conteneur flexible (1) à la deuxième surface d'attache convexe (13) de la base (11) de l'ensemble de fermeture (10) ;
**caractérisée en ce que** :
la première sonotrode (41) presse ce bord supérieur de la première paroi du film (2) du conteneur flexible (1) contre la première surface d'attache convexe (12) de la base (11) de l'ensemble de fermeture (10) dans un premier sens de pression (P1) et la première sonotrode (41) se rétracte et s'étend cycliquement dans un premier sens de vibration (D1) qui est perpendiculaire ou incliné par rapport à ce premier sens de pression (P1) ; et
la deuxième sonotrode (51) presse ce bord supérieur de la deuxième paroi du film (3) du conteneur flexible (1) contre la deuxième surface d'attache convexe (13) de la base (11) de l'ensemble de fermeture (10) dans un deuxième sens de pression (P2) et la deuxième sonotrode (51) se rétracte et s'étend cycliquement dans un deuxième sens de vibration (D2) qui est perpendiculaire ou incliné par rapport à ce deuxième sens de pression (P2).

2. Une machine à conditionner horizontale, automatique, comportant :
une section de formation pour former des conteneurs flexibles (1) à partir d'un film continu thermosoudable, ou une section d'alimentation pour alimenter des conteneurs flexibles (1) faits en un film thermosoudable ;
une section de remplissage comprenant au moins une unité de remplissage remplissant les conteneurs flexibles (1) à travers une ouverture supérieure formée entre les première et deuxièmes parois opposées du film (2,3) des conteneurs flexibles (1) ;
une section de soudage (20) comprenant une unité de placement de fermeture (30) plaçant un ensemble de fermeture (10) dans cette ouverture supérieure de chaque conteneur flexible (1), en positionnant une base (11) de cet ensemble de fermeture (10) entre ces première et deuxième parois du film (2,3), et une unité de soudage attachant les bords supérieurs des première et deuxième parois du film (2,3) aux première et deuxième surfaces d'attache convexes (12,13) prévues sur les premier et deuxième côtés opposés de cette base (11) de l'ensemble de fermeture (10) par soudage ; et
des moyens convoyeurs déplaçant les conteneurs flexibles (1) sur une trajectoire horizontale (T), le long de cette section de remplissage et cette section de soudage (20) avec des groupes dans cette unité de remplissage, cette unité de placement de fermeture (30) et cette unité de soudage ;
dans laquelle l'unité de soudage comporte un dispositif de soudage par ultrasons (40) coopérant avec l'unité de placement de fermeture (30) et comportant :
une première sonotrode (41) aménagée sur un premier côté de cette trajectoire horizontale (T) soudant par ultrasons la première paroi du film (2) du conteneur flexible (1) à cette première surface d'attache convexe (12) de la base (11) de l'ensemble de fermeture (10), en coopération avec une deuxième sonotrode (51) aménagée sur le deuxième côté de la trajectoire horizontale (T) soudant par ultrasons la deuxième paroi du film (3) du conteneur flexible (1) à la deuxième surface d'attache convexe (13) de la base de l'ensemble de fermeture (10) ;
**caractérisée en ce que** :
la première sonotrode (41) presse ce bord supérieur de la première paroi du film (2) du conteneur flexible (1) contre la première surface d'attache convexe (12) de la base (11) de l'ensemble de fermeture (10) dans un premier sens de pression (P1) et la première sonotrode (41) se rétracte et s'étend cycliquement dans un premier sens de vibration (D1) qui est perpendiculaire ou incliné par rapport à ce premier sens de pression (P1) ; et
la deuxième sonotrode (51) presse ce bord supérieur de la deuxième paroi du film (3) du conteneur flexible (1) contre la deuxième surface d'attache convexe (13) de la base (11) de l'ensemble de fermeture (10) dans un deuxième sens de pression (P2) et la deuxième sonotrode (51) se rétracte et s'étend cycliquement dans un deuxième sens de vibration (D2) qui est perpendiculaire ou incliné par rapport à ce deuxième sens de pression (P2).

3. La machine à conditionner horizontale automatique conformément à la revendication 1 ou 2, **caractérisée en ce que** la première sonotrode (41) possède une première surface de contact concave (44) complémentaire de cette première surface d'attache convexe (12) de la base (11) de l'ensemble de fermeture (10) et la deuxième sonotrode (51) possède une deuxième surface de contact concave (53) complémentaire de cette deuxième surface d'attache convexe (13) de la base (11) de l'ensemble de fermeture (10).

4. La machine à conditionner horizontale, automatique, conformément à la revendication 3, **caractérisée en ce que** le dispositif ou les dispositifs de soudage par ultrasons (40, 50) comportent un premier dispositif de déplacement déplaçant la première sonotrode (41) entre une première position en attente, dans laquelle cette première surface de contact concave (44) de la première sonotrode (41) est séparée de la première paroi du film (2) du conteneur flexible (1), et une première position de soudage, dans laquelle la première surface de contact concave (44) de la première sonotrode (41) presse ces bords supérieurs de la première paroi du film (2) du conteneur flexible (1) contre la première surface d'attache convexe (12) de la base (11) de l'ensemble de fermeture (10) et un deuxième dispositif de déplacement déplaçant la deuxième sonotrode (51) entre une deuxième position en attente, dans laquelle cette deuxième surface de contact concave (53) de la deuxième sonotrode (51) est séparée de la deuxième paroi du film (3) du conteneur flexible (1) ; et une deuxième position de soudage, dans laquelle la deuxième surface de contact concave (53) de la deuxième sonotrode (51) presse les bords supérieurs de la deuxième paroi du film (3) du conteneur flexible (1) contre la deuxième surface d'attache convexe (13) de la base (11) de l'ensemble de fermeture (10).

5. La machine à conditionner horizontale, automatique, conformément à une quelconque des revendications précédentes, **caractérisée en ce que** l'unité de placement de fermeture (30) comporte une chargeur de fermetures (31) dans lequel est aménagée une pluralité d'ensembles de fermeture (10), des crampons de placement (32) montés sur un support mobile (33), des moyens d'actionnement de crampon déplaçant les crampons de placement (32) entre une position ouverte et une position fermée et des moyens d'actionnement de placement déplaçant le support mobile (33) entre une position de préhension, dans laquelle le support mobile (33) maintient les crampons de placement (32) dans une position appropriée pour saisir un des ensembles de fermeture (10) aménagé dans ce chargeur de fermetures (31), et une position de soudage, dans laquelle le support mobile (33) maintient les crampons de placement (32) supportant l'ensemble de fermeture (10) avec sa base (11) entre les première et deuxième parois du film (2,3) et le conteneur flexible (10).

6. La machine à conditionner horizontale automatique conformément à la revendication 5, **caractérisée en ce que** l'unité de placement de fermeture (30) possède une sortie située au-dessus et alignée avec la trajectoire horizontale (T), et ces moyens d'actionnement de placement donne au support mobile (33) un mouvement rotatif sur un axe perpendiculaire à la trajectoire horizontale (T) entre cette position de préhension et cette position de soudage.

7. La machine à conditionner horizontale automatique conformément à la revendication 5, **caractérisée en ce que** l'unité de placement de fermeture (30) possède une sortie située au-dessus de la trajectoire horizontale (T) et décalée vers le deuxième côté de la trajectoire horizontale (T), et ces moyens d'actionnement de placement donnent au support mobile (33) un mouvement rotatoire sur un axe perpendiculaire à la trajectoire horizontale (T) en combinaison avec un mouvement de translation dans un sens perpendiculaire à la trajectoire horizontale (T) entre cette position de préhension et cette position de soudage.

8. La machine à conditionner horizontale, automatique, conformément à la revendication 1, **caractérisée en ce que** la première plaque (42) presse ces bords supérieurs de la deuxième paroi du film (3) du conteneur flexible (1) contre la deuxième surface d'attache convexe (13) de la base (11) de l'ensemble de fermeture (10) dans ce premier sens de pression (P1), et la deuxième plaque (52) presse les bords supérieurs de la première paroi du film (2) du conteneur flexible (1) contre la première surface d'attache convexe (12) de la base (11) de l'ensemble de fermeture (10) dans ce deuxième sens de pression (P2).

9. La machine à conditionner horizontale, automatique, conformément à la revendication 1 ou 8, **caractérisée en ce que** la première plaque (42) possède une première surface de pression concave (43) complémentaire de cette deuxième surface d'attache convexe (13) de la base (11) de l'ensemble de fermeture (10) et la deuxième plaque (52) possède une deuxième surface de pression concave (54) complémentaire de la première surface d'attache convexe (12) de la base (11) de l'ensemble de fermeture (10).

10. La machine à conditionner horizontale, automatique, conformément à la revendication 9, **caractérisée en ce qu'**un premier dispositif de déplacement déplace la première plaque (42) entre une première position en attente, dans laquelle cette première surface de pression concave (43) de la première plaque (42) est séparée de la deuxième paroi du film (3) du conteneur flexible (1), et une première position de soudage, dans laquelle la première surface de pression concave (43) de la première plaque (42) presse ce bord supérieur de la deuxième paroi du film (3) du conteneur flexible (1) contre la deuxième surface d'attache convexe (13) de la base (11) de l'ensemble de fermeture (10), et un deuxième dispositif de déplacement déplace la deuxième plaque (52) entre une deuxième position en attente , dans laquelle cette deuxième surface de pression concave (54) de la deuxième plaque (52) est séparée de la première paroi du film (2) du conteneur flexible (1), et une deuxième position de soudage, dans laquelle la deuxième surface de pression concave (54) de la deuxième plaque (52) presse le bord supérieur de la première paroi du film (2) du conteneur flexible (1) contre la première surface d'attache convexe (12) de la base (11) de l'ensemble de fermeture (10).
